# EUROPEAN PATENT SPECIFICATION

(11) **EP 2 590 293 B1**
(45) Date of publication and mention of the grant of the patent: **11.03.2015**
(21) Application number: 12190889.1
(22) Date of filing: 31.10.2012
(51) Int. Cl.: H02J 5/00, H02J 7/00, H02J 7/02

(54) **Contactless power transmitting system having overheat protection function and method thereof**
Kontaktloses Stromübertragungssystem mit Überhitzungsschutzfunktion und Verfahren dafür
Système de transmission de puissance sans contact ayant une fonction de protection contre la surchauffe et procédé associé

(30) Priority: 02.11.2011 KR 20110113239
(43) Date of publication of application: 08.05.2013
(73) Proprietor: Hanrim Postech Co., Ltd, Suwon-si, Gyeonggi-do (KR)
(72) Inventor: Jung, Chun-Kil, Gangnam-gu, Seoul (KR)
(74) Representative: Zardi, Marco

(56) References cited:
- WO-A1-2012/141800
- WO-A2-2009/105595
- WO-A2-2010/020895
- GB-A- 2 416 633
- US-A- 5 963 012
- US-A1- 2010 207 771
- US-A1- 2011 169 446

## Description

### BACKGROUND

### Field

The present invention relates to a contactless power transmitting system having an overheat protection function of allowing a battery cell module not to be damaged due to overheat in the case in which a power is charged in the battery cell module, and a method thereof.

### Description of the Related Art

Generally, a portable terminal such as a cellular phone, a personal digital assistant (PDA), or the like, has been mounted with a battery pack. The battery pack may be charged with a power supplied from an external charging apparatus and supply the charged power to the portable terminal to operate the portable terminal according to a manipulation of a user.

The battery pack may include a battery cell module charged with the power, a charging and discharging circuit charging the power in the battery cell module and discharging the power charged in the battery cell module, and the like.

As a scheme of electrically connecting the battery pack included in the portable terminal and the charging apparatus supplying electrical energy to each other, there is a terminal connection scheme of directly connecting a terminal of the charging apparatus and a terminal of the battery pack to each other.

However, in the terminal connection scheme, in the case in which the terminal of the charging apparatus and the terminal of the battery pack contact each other or are separated from each other, since the terminal of the battery pack and the terminal of the charging apparatus have different potential differences, an instantaneous discharge phenomenon occurs.

The instantaneous discharge phenomenon causes abrasion of the terminal of the battery pack and the terminal of the charging apparatus and causes a risk of an accident such as a fire, or the like, in the case in which foreign materials are accumulated in the terminal of the battery pack and the terminal of the charging apparatus.

In addition, the electrical energy charged in the battery pack is naturally discharged to the outside through the terminal of the battery pack due to moisture, or the like, such that a lifespan of the battery pack may be decreased and performance thereof may be deteriorated.

Recently, contactless power transmitting systems using a scheme of transmitting a power without a contact have been suggested in order to solve several problems of the terminal connection scheme as described above.

In these contactless power transmitting systems, efforts to improve transmission efficiency of the power as well as to stably transmit and receive the power have been made.

US2010/0207771A1 discloses an apparatus for transferring power to through an isolated, insulated connection. US2011/0169446A1 discloses a power transmission terminal including a charging control unit which outputs an alternating current signal having a charging control voltage based on a charging control signal. GB2416633A discloses a wireless battery charger for cellular telephone. WO 2010/020895A2 discloses a mobile device to control a charge pad system. US 5963012A discloses a wireless battery charging system having adaptive parameter sensing, wherein a battery pack and battery charging system provides contactless dynamic battery parameter. WO 2012/141800A1 discloses a wireless charging system wherein overheating is prevented.

### SUMMARY

An object of the present invention is to provide a contactless power transmitting system having an overheat protection function of protecting a battery cell module so as not to be damaged due to overheat in the case in which a power is charged in the battery cell module in the contactless power transmitting system, and a method thereof.

Another object of the present invention is to provide a contactless power transmitting system having an overheat protection function of protecting a battery cell module so as not to be damaged due to overheat by allowing a contactless power transmitting apparatus to transmit a first power to a contactless power receiving apparatus to charge the first power in the battery cell module and transmit a second power lower than the first power to the contactless power receiving apparatus to charge the second power in the battery cell module in the case in which the battery cell module is overheated to a predetermined temperature or more, and a method thereof.

Objects of the present invention are not limited to the above-mentioned objects. That is, other objects that are not mentioned may be obviously understood by those skilled in the art to which the present invention pertains from the following description.

According to an exemplary embodiment of the present invention, in the state in which a contactless power receiving apparatus receives a first power transmitted by a contactless power transmitting apparatus and a charging apparatus charges the first power in a battery cell module, the contactless power receiving apparatus judges whether or not the battery cell module has been overheated.

The judging of whether or not the battery cell module has been overheated may be performed by a process of detecting a first temperature of the battery cell module using a first temperature sensor and judging that the battery cell module has been overheated in the case in which the detected first temperature is equal to or higher than a preset temperature.

In addition, the judging of whether or not the battery cell module has been overheated may be performed by a process of detecting a first temperature of the battery cell module using a first temperature sensor, detecting a second temperature of the outside using a second temperature sensor and judging that the battery cell module has been overheated in the case in which the first temperature is higher than the second temperature by a preset temperature or more.

In the case in which it is judged that the battery cell module has been overheated, the contactless power receiving apparatus generates an overheat alarm signal to transmit the generated contactless power to the contactless power transmitting apparatus.

The contactless power transmitting apparatus transmits a second power lower than the first power to the contactless power receiving apparatus in the case in which the overheat alarm signal is received from the contactless power receiving apparatus to charge the second power in the battery cell module, thereby allowing the battery cell module not to be overheated.

In addition, after the contactless power receiving apparatus generates the overheat alarm signal, the charging apparatus is switched into a second power charging mode in which the second power is charged in the battery cell module, thereby preventing generation of an error.

According to an exemplary embodiment of the present invention, there is provided a contactless power transmitting apparatus having an overheat protection function, including: a power transmitting unit including a power transmitting coil transmitting a power to a contactless power receiving apparatus; a first signal receiving unit receiving an overheat alarm signal transmitted by the contactless power receiving apparatus; and a contactless power transmission controlling unit controlling the power transmitting unit to transmit a first power to the contactless power receiving apparatus and controlling the power transmitting unit to transmit a second power lower than the first power to the contactless power receiving apparatus in the case in which the first signal receiving unit receives the overheat alarm signal.

The power transmitting unit may include: a driving driver generating a driving signal for transmitting the first power or the second power under a control of the contactless power transmission controlling unit; a series resonant converter switching a direct current (DC) power according to the driving signal; and the power transmitting coil transmitting the first power or the second power to the contactless power receiving apparatus while being resonated with the power switched by the series resonant converter.

The contactless power transmitting apparatus having an overheat protection function may further include a first signal transmitting unit generating an identification (ID) request signal under a control of the contactless power transmission controlling unit to transmit the generated ID signal to the contactless power receiving apparatus, wherein the first signal receiving unit receives an ID signal transmitted by the contactless power receiving apparatus according to the ID request signal to provide the received ID signal to the contactless power transmission controlling unit.

According to another exemplary embodiment of the present invention, there is provided a contactless power receiving apparatus having an overheat protection function, including: a charging apparatus receiving a first power transmitted by a contactless power transmitting apparatus to charge the first power in a battery cell module; a second signal transmitting unit generating an overheat alarm signal to transmit the overheat alarm signal to the contactless power transmitting apparatus; and a contactless power reception controlling unit judging whether or not the battery cell module has been overheated, and controlling the second signal transmitting unit to generate the overheat alarm signal to transmit the generated overheat alarm signal to the contactless power transmitting apparatus and then controlling the charging apparatus to receive a second power lower than the first power from the contactless power transmitting apparatus to charge the second power in the battery cell module, in the case in which it is judged that the battery cell module has been overheated.

The contactless power receiving apparatus having an overheat protection function may further include a first temperature sensor detecting a first temperature of the battery cell module, wherein the contactless power reception controlling unit judges whether or not the battery cell module has been overheated using the first temperature.

The contactless power receiving apparatus having an overheat protection function may further include a second temperature sensor detecting a second temperature of the outside, wherein the contactless power reception controlling unit judges that the battery cell module has been overheated in the case in which a difference between the first and second temperatures is larger than a preset value.

The contactless power receiving apparatus having an overheat protection function may further include a second signal receiving unit receiving an ID request signal transmitted by the contactless power transmitting apparatus to provide the ID request signal to the contactless power reception controlling unit, wherein the second signal transmitting unit generates an ID signal under a control of the contactless power reception controlling unit to transmit the generated ID request signal to the contactless power transmitting apparatus, in the case in which the ID request signal is received.

The charging apparatus may include: a power receiving coil receiving the first power or the second power transmitted by the contactless power transmitting apparatus; a rectifying unit converting the first power or the second power received by the power receiving coil into a DC power; and a charging unit charging the DC power rectified by the rectifying unit in the battery cell module under a control of the contactless power reception controlling unit.

According to still another exemplary embodiment of the present invention, there is provided a contactless power receiving method having an overheat protection function, including: transmitting, in a contactless power transmitting apparatus, a first power to a contactless power receiving apparatus through a power transmitting coil; and transmitting, in the contactless power transmitting apparatus, a second power lower than the first power to the contactless power receiving apparatus through the power transmitting coil in the case in which an overheat alarm signal is received from the contactless power receiving apparatus.

The transmitting of the first power may include: transmitting, in the contactless power transmitting apparatus, an ID request signal to the contactless power receiving apparatus; and transmitting the first power in the case in which an ID signal is received from the contactless power receiving apparatus according to the ID request signal.

The transmitting of the ID request signal may include: judging whether or not a change in a load has been generated in the power transmitting coil; and transmitting the ID request signal in the case in which it is judged that the change in the load has been generated in the power transmitting coil.

The contactless power transmitting method having an overheat protection function may further include, in a contactless power transmission controlling unit, stopping the transmission of the power in the case in which a charging completion signal is received from the contactless power receiving apparatus.

According to still another exemplary embodiment of the present invention, there is provided a contactless power transmitting method having an overheat protection function, including: receiving, in a charging apparatus, a first power transmitted by a contactless power transmitting apparatus to charge the first power in a battery cell module; judging, in a contactless power reception controlling unit, whether or not the battery cell module has been overheated; and transmitting, in the contactless power reception controlling unit, an overheat alarm signal to the contactless power transmitting apparatus and then receiving, in the charging apparatus, a second power lower than the first power to charge the second power in the battery cell module, in the case in which it is judged that the battery cell module has been overheated.

The judging of whether or not the battery cell module has been overheated may include: detecting, in a first temperature sensor, a first temperature of the battery cell module; and judging that the battery cell module has been overheated in the case in which the first temperature is equal to or higher than a preset temperature.

The judging of whether or not the battery cell module has been overheated may include: detecting, in a first temperature sensor, a first temperature of the battery cell module; detecting, in a second temperature sensor, a second temperature of the outside; and judging that the battery cell module has been overheated in the case in which a difference between the first and second temperatures is larger than a preset value.

The contactless power receiving method having an overheat protection function may further include: judging, in the contactless power reception controlling unit, whether or not the charging of the battery cell module has been completed; and generating a charging completion signal to transmit the generated charging completion signal to the contactless power transmitting apparatus in the case in which it is judged that the charging of the battery cell module has been completed.

### BRIEF DESCRIPTION OF THE DRAWINGS

Hereinafter, the present invention will be described in detailed through exemplary embodiments thereof with reference to the accompanying drawings, in some of which the same reference numeral will be used to describe the same component.
FIG. 1 is a view showing a configuration of a contactless power transmitting system according to an exemplary embodiment of the present invention;
FIG. 2 is a signal flow chart showing operations of a contactless power transmission controlling unit in a method according to an exemplary embodiment of the present invention; and
FIG. 3 is a signal flow chart showing operations of a contactless power reception controlling unit in a method according to an exemplary embodiment of the present invention.

### DETAILED DESCRIPTION

The following detailed description is only an example and only illustrates exemplary embodiments of the present invention. In addition, a principle and a concept of the present invention are provided in order to most usefully and easily describe the present invention.

Therefore, for basic understanding of the present invention, a more detailed structure than necessary will not be provided, and several forms of the present invention that may be executed by those skilled in the art will be illustrated in the accompanying drawings.

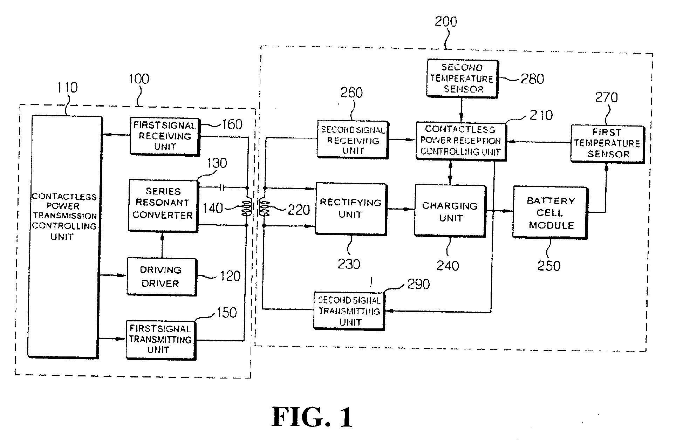

FIG. 1 is a view showing a configuration of a contactless power transmitting system having an overheat protection function according to an exemplary embodiment of the present invention. As shown in FIG. 1, the contactless power transmitting system having an overheat protection function according to the exemplary embodiment of the present invention may be configured to include a contactless power transmitting apparatus 100 and a contactless power receiving apparatus 200.

The contactless power transmitting apparatus 100 transmit a power using an electromagnetic induction scheme, and the contactless power receiving apparatus 200 receives the power using the electromagnetic induction scheme. More specifically, the contactless power transmitting apparatus 100 transmits a first power or a second power lower than the first power without a contact, and the contactless power receiving apparatus 200 receives the first power or the second power transmitted by the contactless power transmitting apparatus 100 without the contact to charge the first power or the second power in a battery cell module 250 or supply an operation power to a load such as a portable terminal, or the like, including the contactless power receiving apparatus 200.

The contactless power transmitting apparatus 100 is operated by a direct current (DC) power supplied by an alternate current (AC) to DC converter (not shown), wherein the AC to DC converter may be provided separately from the contactless power transmitting apparatus 100 or provided integrally with the contactless power transmitting apparatus 100.

The contactless power transmitting apparatus 100 may include a contactless power transmission controlling unit 110, a power transmitting unit, a first signal transmitting unit 150, and a first signal receiving unit 160.

The contactless power transmission controlling unit 110 recognizes the contactless power receiving apparatus 200 and controls an operation of transmitting the first power or transmitting the second power lower than the first power without the contact.

The power transmitting unit, which transmits the first power or the second power to the contactless power receiving apparatus 200 without the contact under the control of the contactless power transmission controlling unit 110, may include a driving driver 120, a series resonant converter 130, and a power transmitting coil 140.

The driving driver 120 generates a driving signal to detect a change in a load, a driving signal to transmit the first power without the contact, a driving signal to transmit the second power without the contact, or the like, under the control of the contactless power transmission controlling unit 110.

The series resonant converter 130 switches a DC power supplied from the AC to DC converter, or the like, according to the driving signal generated by the driving driver 120.

The power transmitting coil 140 of the power transmitting unit generates the signal to detect the change in the load while being resonated in series with the power switched by the series resonant converter 130 or transmits the first power or the second power without the contact.

Here, although one power transmitting coil 140 is shown, a plurality of power transmitting coils may be connected and used in parallel with each other in practicing the present invention. In the case of using the plurality of power transmitting coils, a switch and a capacitor may be provided in series with each of the plurality of power transmitting coils, and the switch may be selectively switched under the control of the contactless power transmission controlling unit 110 to allow the power switched in the series resonant converter 130 to be selectively output to the plurality of power transmitting coils.

The first signal transmitting unit 150 generates an identification (ID) request signal, or the like, under the control of the contactless power transmission controlling unit 110 and outputs the generated ID request signal, or the like, to the power transmitting coil 140 to allow the ID request signal, or the like, to be transmitted to the contactless power receiving apparatus 200.

The first signal receiving unit 160 receives a signal indicating a change in a load of the power transmitting coil 140, an ID signal transmitted by the contactless power receiving apparatus 200, an overheat alarm signal, a changing completion signal, and the like, and the received signal indicating the change in the load, the ID signal, the overheat alarm signal, the charging completion signal, and the like, to the contactless power transmission controlling unit 110.

The contactless power receiving apparatus 200 may include a contactless power reception controlling unit 210, a charging apparatus, a battery cell module 250, a second signal receiving unit 260, a first temperature sensor 270, a second temperature sensor 280, a second signal transmitting unit 290, and the like.

The contactless power reception controlling unit 210 performs a control to transmit the ID signal to the contactless power transmitting apparatus 100 according to the ID request signal transmitted by the contactless power transmitting apparatus 100, performs a control to receive the first power or the second power transmitted by the contactless power transmitting apparatus 100 to charge the first power or the second power in the battery cell module 250, and performs a control to generate an overheat alarm signal in the case in which the battery cell module 250 is overheated to transmit the overheat alarm signal to the contactless power transmitting apparatus 100.

The charging apparatus, which receives the first power or the second power transmitted by the contactless power transmitting apparatus 100 to charge the first power or the second power in the battery cell module 250 under the control of the contactless power reception controlling unit 210, includes a power receiving coil 220, a rectifying unit 230, and a charging unit 240.

The power receiving coil 220 is coupled to the power transmitting coil 140 of the contactless power transmitting apparatus 100 in an electromagnetic induction scheme to receive the first power or the second power transmitted by the contactless power transmitting apparatus 100.

The rectifying unit 230 rectifies the first power or the second power received by the power receiving coil 220 to convert the first power or the second power into a DC power.

The charging unit 240 charges the DC power rectified by the rectifying unit 230 in the battery cell module 250 under the control of the contactless power reception controlling unit 210.

The second signal receiving unit 260 receives the ID request signal, or the like, transmitted by the contactless power transmitting apparatus 100 through the power receiving coil 220 and provides the received ID request signal, or the like, to the contactless power reception controlling unit 210.

The first temperature sensor 270 detects a first temperature of the battery cell module 250 and provides the detected first temperature to the contactless power reception controlling unit 210.

The second temperature sensor 280 detects a second temperature of the outside and provides the detected second temperature to the contactless power reception controlling unit 210.

The second signal transmitting unit 290 generates the ID signal, the overheat alarm signal, the charging completion signal, and the like, under the control of the contactless power reception controlling unit 210 and transmits the generated ID signal, overheat alarm signal, charging completion signal, and the like, to the contactless power transmitting apparatus 100 through the power receiving coil 220.

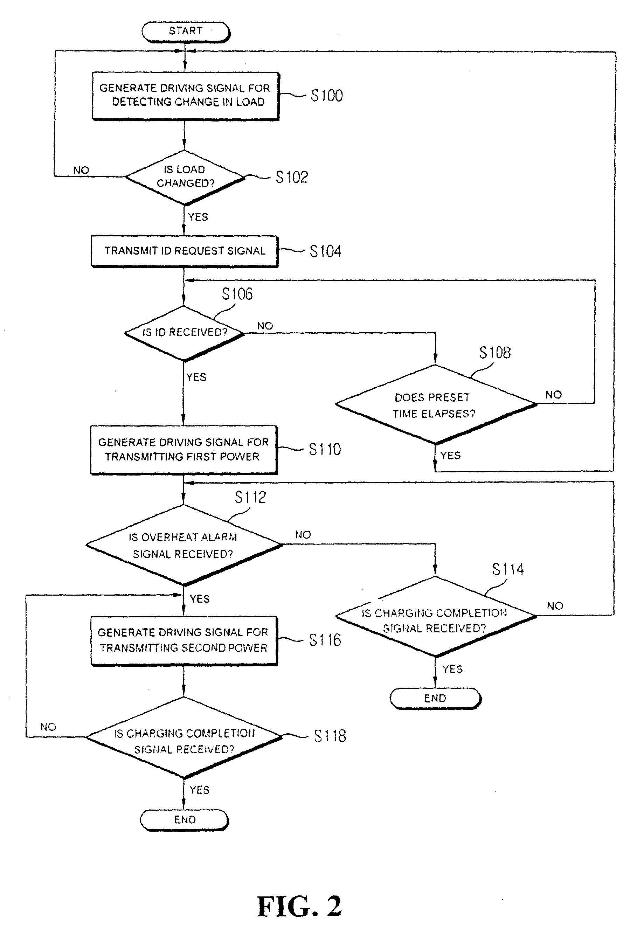

FIG. 2 is a signal flow chart showing operations of a contactless power transmission controlling unit 110 of a contactless power transmitting apparatus 100 in a method according to an exemplary embodiment of the present invention. Referring to FIG. 2, the contactless power transmitting apparatus 100 should judge whether or not the contactless power receiving apparatus 200 may receive a power transmitted by the contactless power transmitting apparatus 100 in order to transmit the power to the contactless power receiving apparatus 200. That is, whether or not the power receiving coil 220 of the contactless power receiving apparatus 200 has been positioned at a position of the power transmitting coil 140 included in the contactless power transmitting apparatus 100 should be judged.

To this end, the contactless power transmission controlling unit 110 of the contactless power transmitting apparatus 100 controls the driving driver 120 to generate the driving signal for detecting the change in the load (S100).

The driving signal generated by the driving driver 120 is input to the serial resonant converter 130.

The serial resonant converter 130, which includes switching devices such as a plurality of transistors, a plurality of metal oxide semiconductor field effect transistors (MOSFETs), selectively switches a plurality of switching devices according to the driving signal generated by the driving driver 120 to switch a DC power, thereby generating an AC power and outputting the generated AC power to the power transmitting coil 140, such that serial resonance is generated in the power transmitting coil 140.

In this state, the first signal receiving unit 160 receives the signal of the power transmitting coil 140 and outputs the received signal to the contactless power transmission controlling unit 110.

The contactless power transmission controlling unit 110 is input with the signal of the first signal receiving unit 160 and judges whether or not the change in the load has been generated in the power transmitting coil 140 using the input signal (S102).

That is, in the case in which the power receiving coil 220 of the contactless power receiving apparatus 200 does not approach the power transmitting coil 140, a change in impedance is not generated in the power transmitting coil 140.

In this case, the first signal receiving unit 160 may receive only a signal of a frequency according to the driving signal generated by the driving driver 120, and the contactless power transmission controlling unit 110 may judge that the change in the load has not been generated in the power transmitting coil 140 using the signal of the first signal receiving unit 160.

In addition, when the power receiving coil 220 of the contactless power receiving apparatus 200 approaches the power transmitting coil 140 in order to charge the power in the battery pack module 240 of the contactless power receiving apparatus 200, a change in impedance is generated in the power transmitting coil 140, and a frequency of a signal for detecting the change in the load, applied to the power transmitting coil 140 is changed according to the generated change in the impedance.

In this case, the first signal receiving unit 160 receives the signal having the frequency changed according to the change in the impedance, and the contactless power transmission controlling unit 110 judges that the change in the load has been generated in the power transmitting coil 140 using the signal of the first signal receiving unit 160.

In the case in which it is judged in step (S102) that the change in the load had not been generated, the contactless power transmission controlling unit 110 returns to step (S100) to repeatedly perform an operation of controlling the driving driver 120 to continuously generate the driving signal for detecting the change in the load and judging whether or not the change in the load has been generated.

In the case in which it is judged in step (S102) that the change in the load has been generated, the contactless power transmission controlling unit 110 controls the first signal transmitting unit 150 to generate the ID request signal requesting the ID of the contactless power receiving apparatus 200 and transmits the generated ID request signal to the contactless power receiving apparatus 200 through the power transmitting coil 140 (S104).

Then, the contactless power transmission controlling unit 110 is input with the signal of the first signal receiving unit 160 to judge whether or not the ID signal has been received from the contactless power receiving apparatus 200 (S106).

That is, the change in the impedance is generated in the power transmitting coil 140 due to several causes. For example, in the case in which the power receiving coil 220 of the contactless power receiving apparatus 200 approaches the power transmitting coil 140 as described above, the change in the impedance may be generated. However, even in the case in which foreign materials other than the contactless power receiving apparatus 200 approach the power transmitting coil 140, the change in the impedance may be generated.

In the case in which the impedance is generated by the foreign materials, when the contactless power transmitting apparatus 100 transmits the power, a large amount of power is unnecessarily consumed.

Therefore, the contactless power transmission controlling unit 110 transmits the ID request signal request the ID to the contactless power receiving apparatus 200 in the case in which it is judged that the change in the load has been generated in the power transmitting coil 140 and judges that the impedance of the power transmitting coil 140 has been changed by the contactless power receiving apparatus 200 in the case in which the ID signal is received from the contactless power receiving apparatus 200 according to the ID request signal.

In the case in which it is judged in step (S106) that the ID signal has not been received, the contactless power transmission controlling unit 110 judges whether or not a preset time has elapsed (S108) and returns to step (S106) when it is judged that the preset time has not elapsed, thereby repeatedly performing an operation of judging whether or not the ID has been received from the contactless power receiving apparatus 200.

In the case in which the ID signal is not received from the contactless power receiving apparatus 200 even though the preset time elapses, the contactless power transmission controlling unit 110 returns to step (S100) to repeatedly perform an operation of generating the driving signal for detecting the change in the load and operations after the operation of generating the driving signal.

On the other hand, in the case in which the ID signal is received before the preset time elapses, the contactless power transmission controlling unit 110 judges that the power receiving coil 220 of the contactless power receiving apparatus 200 has approached the power transmitting coil 140 and controls the driving driver 120 to generate the driving signal for transmitting the first power (S110).

The switching devices of the series resonant converter 130 are switched according to the driving signal for transmitting the first power, generated by the driving driver 120 to switch the DC power and apply the switched power to the power transmitting coil 140, such that the first power is transmitted from the power transmitting coil 140 to the power receiving coil 220 of the contactless power receiving apparatus 200.

In this state, the contactless power transmission controlling unit 110 is input with the signal of the first signal receiving unit 160 to judge whether or not the overheat alarm signal has been received from the contactless power receiving apparatus 200 (S112), and judges whether or not the charging completion signal has been received from the contactless power receiving apparatus 200 (S114) in the case in which it is judged that the overheat alarm signal has not been received.

In the case in which it is judged that the charging completion signal has been received from the contactless power receiving apparatus 200, the contactless power transmission controlling unit 110 ends a power transmitting operation.

In addition, in the case in which the overheat alarm signal is received before the charging completion signal is received from the contactless power receiving apparatus 200, the contactless power transmission controlling unit 110 controls the driving driver 120 to generate the driving signal for transmitting the second power lower than the first power (S116).

In this case, the switching devices of the series resonant converter 130 are switched according to the driving signal for transmitting the second power, generated by the driving driver 120, such that the second power is transmitted from the power transmitting coil 140 to the power receiving coil 220.

In this state, the contactless power transmission controlling unit 110 is input with the signal of the first signal receiving unit 160 to judge whether or not the charging completion signal has been received from the contactless power receiving apparatus 200 (S118).

In the case in which it is judged that the charging completion signal has not been received, the contactless power transmission controlling unit 110 returns to step (S116) to repeatedly perform operations of allowing the driving driver 120 to continuously generate the driving signal for the second power and judging whether or not the charging completion signal has been received from the contactless power receiving apparatus 200 and ends the power transmitting operation in the case in which the charging completion signal is received.

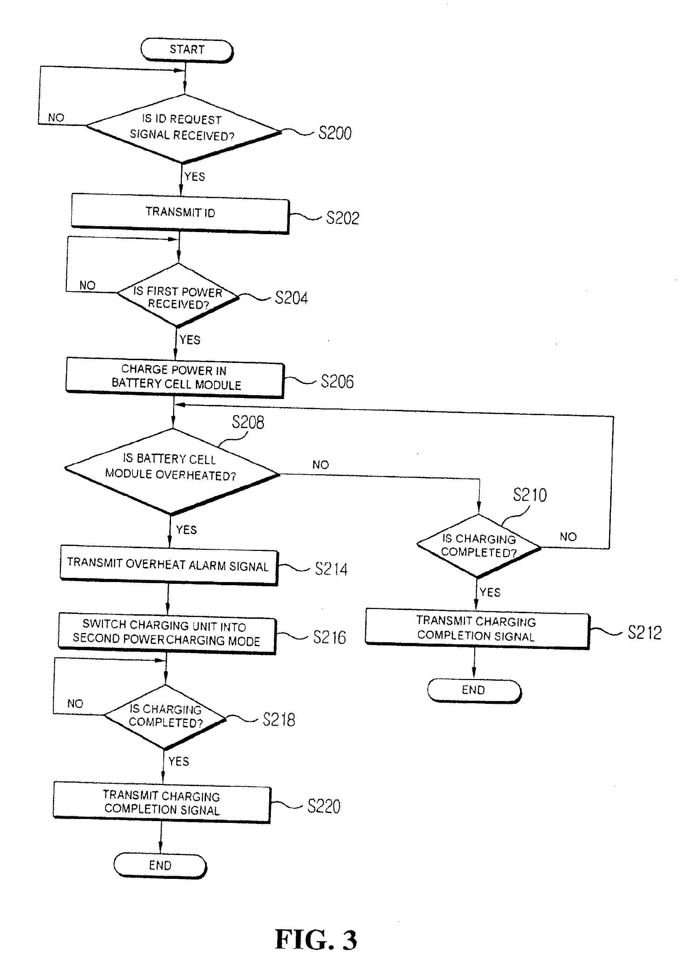

FIG. 3 is a signal flow chart showing operations of a contactless power reception controlling unit 210 in a method according to an exemplary embodiment of the present invention. Referring to FIG. 3, the contactless power reception controlling unit 210 judges whether or not the ID request signal has been received from the contactless power transmitting apparatus 100 (S200).

That is, the ID request signal that the contactless power transmission controlling unit 110 of the contactless power transmitting apparatus 100 controls the first signal transmitting unit 150 to transmit in step (S104) is induced from the power transmitting coil 140 to the power receiving coil 220, the second signal receiving unit 260 receives the induced ID request signal to input the received ID request signal to the contactless power reception controlling unit 210, and the contactless power reception controlling unit 210 is input with the signal received by the second signal receiving unit 260 to judge whether or not the ID request signal has been received.

When the ID request signal is received from the contactless power transmitting apparatus 100, the contactless power reception controlling unit 210 controls the second signal transmitting unit 290 to generate the ID signal and transmit the generated ID signal to the contactless power transmitting apparatus 100 through the power receiving coil 220 (S202).

The ID signal transmitted by the contactless power receiving apparatus 200 is induced from the power receiving coil 220 to the power transmitting coil 140 as described above, the first signal receiving unit 160 receives the ID signal induced to the power transmitting coil 140 to input the received ID signal to the contactless power transmission controlling unit 110, and the contactless power transmission controlling unit 110 may judge whether or not the ID signal has been received in step (S106) using the signal received by the first signal receiving unit 160.

In this state, the first power transmitted by the contactless power transmitting apparatus 100 without the contact is induced to the power receiving coil 220, the rectifying unit 230 rectifies the induced first power to output the rectified first power to the charging unit 240, and the contactless power reception controlling unit 210 monitors the charging unit 240 to judge whether or not the first power has been received (S204).

In the case in which it is judged that the first power has been received from the contactless power transmitting apparatus 100, the contactless power reception controlling unit 210 controls the charging unit 240 to charge the received first power in the battery cell module 250 (S206).

In the state in which the first power is charged in the battery cell module 250 as described above, the contactless power reception controlling unit 210 judges whether or not the battery cell module 250 has been overheated (S208).

Here, whether or not the battery cell module 250 has been overheated may be judged by several methods.

For example, the contactless power reception controlling unit 210 may detect a first temperature of the battery cell module 250 using the first temperature sensor 270 and judge that the battery cell module 250 has been overheated in the case in which the detected first temperature of the battery cell module 250 is equal to or higher than a preset temperature. In this case, the second temperature sensor 280 may not be provided.

In addition, the contactless power reception controlling unit 210 may detect a second temperature of the outside at which the contactless power receiving apparatus 200 is positioned using the second temperature sensor 280 as well as detect the first temperature of the battery cell module 250 using the first temperature sensor 270, and judge that the battery cell module 250 has been overheated in the case in which the first temperature of the battery cell module 250 is equal to or higher than the preset temperature based on the detected second temperature, for example, in the case in which the first temperature is higher than the second temperature by 10°C or more.

In the case in which it is judged that the battery cell module 250 has not been overheated, the contactless power reception controlling unit 210 monitors the charging unit 240 to judge whether or not the charging of the battery cell module 250 has been completed (S210).

In this state, when it is judged that the charging of the battery cell module 250 has been completed without generation of the overheat, the contactless power reception controlling unit 210 controls the second signal transmitting unit 290 to generate the charging completion signal and transmit the generated charging completion signal to the contactless power transmitting apparatus 100 through the power receiving coil 220 (S212).

The charging completion signal transmitted by the contactless power receiving apparatus 200 is induced to the power transmitting coil 140 of the contactless power transmitting apparatus 100 and is received by the first signal receiving unit 160 as described above, and the contactless power transmission controlling unit 110 may receive the signal of the first signal receiving unit 160 to judge whether or not the charging completion signal has been received in step (S118).

Meanwhile, in the case in which it is judged that the battery cell module 250 has been overheated before the charging of the battery cell module 250 is completed, the contactless power reception controlling unit 210 controls the second signal transmitting unit 290 to generate the overheat alarm signal and transmit the generated overheat alarm signal to the contactless power transmitting apparatus 100 through the power receiving coil 220 (S214).

The overheat alarm signal transmitted by the contactless power receiving apparatus 200 is induced to the power transmitting coil 140 and is received by the first signal receiving unit 160, and the contactless power transmission controlling unit 110 is input with the signal received by the first signal receiving unit 160 to judge whether or not the overheat alarm signal has been received in step (S112) and controls the driving driver 120 to generate the driving signal for transmitting the second power lower than the first power in the case in which it is judged that the overheat alarm signal has been received, thereby allowing the second power to be transmitted, as described above.

In this state, the contactless power reception controlling unit 210 controls the charging unit 240 to be switched into a second power charging mode, thereby allowing the second power to be charged in the battery cell module 250 (S216).

That is, in the case in which the second power lower than the first power is input from the rectifying unit 230 to the charging unit 240 in the state in which the charging unit 240 charges the first power in the battery cell module 250, it is likely that the charging unit 240 will judge that an error has been generated.

Therefore, in the exemplary embodiment of the present invention, the contactless power reception controlling unit 210 generates the overheat alarm signal and then switches the charging unit 240 into the second power charging mode, thereby allowing the charging unit not to judge that the error has been generated.

In the state in which it is judged that the second power is charged the battery cell module 250 as described above, the contactless power reception controlling unit 210 monitors the charging unit 240 to judge whether or not the charging of the battery cell module 250 has been completed (S218).

In the case in which it is judged that the charging has not been completed, the contactless power reception controlling unit 210 repeatedly judges whether or not the charging of the battery cell module 250 has been completed.

In the case in which it is judged that the charging of the battery cell module 250 has been completed, the contactless power reception controlling unit 210 controls the second signal transmitting unit 290 to generate the charging completion signal and transmit the generated charging completion signal to the contactless power transmitting apparatus 100 through the power receiving coil 220 (S220), and then ends a charging operation.

With the contactless power transmitting system having an overheat protection function and the method thereof according to the exemplary embodiment of the present invention, in the state in which the contactless power transmitting apparatus transmits the first power to the contactless power receiving apparatus to charge the first power in the battery cell module, whether or not the battery cell module has been overheated is judged, and the contactless power transmitting apparatus transmits the second power lower than the first power to the contactless power receiving apparatus to charge the second power in the battery cell module in the case in which it is judged that the battery cell module has been overheated.

Therefore, in the case in which the power is charged in the battery cell module, it is possible to prevent the battery cell module from being overheated and damaged in advance and fully charge the power in the battery cell module without damage of the battery cell module due to the overheat.

Although the exemplary embodiments of the present invention have been disclosed for illustrative purposes, those skilled in the art will appreciate that various modifications, additions and substitutions are possible, without departing from the scope of the invention as disclosed in the accompanying claims.

Accordingly, the scope of the present invention is not construed as being limited to the described embodiments but is defined by the appended claims as well as equivalents thereto.

## Claims

1. A contactless power transmitting and receiving system comprising a contactless power transmitting apparatus (100) having an overheat protection function and a contactless power receiving apparatus (200) including a battery cell module (250) and a charging unit (240) to charge the battery cell module (250) with power received from the contactless power transmitting apparatus (100),
said contactless power transmitting apparatus (100) comprising:
- a power transmitting unit including a power transmitting coil (140) for transmitting a power to the contactless power receiving apparatus (200);
- a first signal receiving unit (160) for receiving an overheat alarm signal from the contactless power receiving apparatus (200); and
- a contactless power transmission controlling unit (110) for controlling the power transmitting unit to transmit a first power to the contactless power receiving apparatus (200), and controlling the power transmitting unit to transmit a second power lower than the first power to the contactless power receiving apparatus (200) in the case in which the first signal receiving unit receives the overheat alarm signal, to charge the second power in the battery cell module, thereby allowing the battery cell module not to be overheated
the contactless power receiving apparatus (200) comprising:
- a contactless power reception controlling unit (210) to detect an overheat of the battery cell module (250) when the charging unit (240) charges the first power in the battery cell module (250) and a second signal transmitting unit (290) to transmit an overheat alarm signal to the contactless power transmitting apparatus (100) if said overheat is detected;
- the contactless power reception controlling unit (210) to switch the charging unit (240) in a second power charging mode which allows the second power be charged in the battery cell module (250) when the overheat alarm signal is transmitted to the contactless power transmitting apparatus (100).

2. The system of claim 1, wherein the power transmitting unit includes:
a driving driver (120) generating a driving signal for transmitting the first power or the second power under a control of the contactless power transmission controlling unit (110);
a series resonant converter (130) switching a direct current (DC) power according to the driving signal; and
the power transmitting coil (140) transmitting the first power or the second power to the contactless power receiving apparatus (200) while being resonated with the power switched by the series resonant converter (130).

3. The system of claim 1, wherein the power transmitting apparatus further comprising a first signal transmitting unit (150) generating an identification (ID) request signal under a control of the contactless power transmission controlling unit (110) to transmit the generated ID signal to the contactless power receiving apparatus (200),
wherein the first signal receiving unit (160) receives an ID signal transmitted by the contactless power receiving apparatus (200) according to the ID request signal to provide the received ID signal to the contactless power transmission controlling unit (110).

4. A contactless power receiving apparatus (200) having an overheat protection function, comprising:
a charging apparatus adapted to receive a first power transmitted by a contactless power transmitting apparatus (100) to charge a battery cell module (250);
a second signal transmitting unit (290) to generate an overheat alarm signal to transmit the overheat alarm signal to the contactless power transmitting apparatus (100);
a charging unit (240) for charging the battery cell module (250) by the first power in a first power charging mode; and
a contactless power reception controlling unit (210) judging whether or not the battery cell module has been overheated, and controlling the second signal transmitting unit (290) to generate the overheat alarm signal and to transmit the generated overheat alarm signal to the contactless power transmitting apparatus (100) in the case in which it is judged that the battery cell module has been overheated and then controlling the charging apparatus to receive a second power lower than the first power from the contactless power transmitting apparatus (100) to charge the second power in the battery cell module (250), thereby allowing the battery cell module not to be overheated,
wherein when the contactless power receiving apparatus (200) generates the overheat alarm signal, the reception controlling unit (210) switches the charging unit (240) into a second power charging mode which allows the second power to be charged in the battery cell module (250).

5. The contactless power receiving apparatus having an overheat protection function of claim 4, further comprising a first temperature sensor (270) detecting a first temperature of the battery cell module (250),
wherein the contactless power reception controlling unit (210) judges whether or not the battery cell module (250) has been overheated using the first temperature.

6. The contactless power receiving apparatus having an overheat protection function of claim 5, further comprising a second temperature sensor (280) detecting a second temperature of the outside of the battery cell module (250),
wherein the contactless power reception controlling unit (210) judges that the battery cell module (250) has been overheated in the case in which a difference between the first and second temperatures is larger than a preset value.

7. The contactless power receiving apparatus having an overheat protection function of claim 4, further comprising a second signal receiving unit (260) receiving an ID request signal transmitted by the contactless power transmitting apparatus (400) to provide the ID request signal to the contactless power reception controlling unit (210), wherein the second signal transmitting unit (290) generates an ID signal under a control of the contactless power reception controlling unit (210) to transmit the generated ID request signal to the contactless power transmitting apparatus (100), in the case in which the ID request signal is received.

8. The contactless power receiving apparatus having an overheat protection function of claim 4, wherein the charging apparatus includes:
a power receiving coil (220) adapted to receive the first power or the second power transmitted by the contactless power transmitting apparatus (100); a rectifying unit (230) for converting the first power or the second power received by the power receiving coil (220) into a DC power; and
a charging unit (240) for charging the DC power rectified by the rectifying unit (230) in the battery cell module (250) under a control of the contactless power reception controlling unit (210).

9. A contactless power transmitting and receiving method having an overheat protection function, comprising:
transmitting, in a contactless power transmitting apparatus (100), a first power to a contactless power receiving apparatus(200) in a first power charge mode through a power transmitting coil (140), the contactless power receiving apparatus (200) including a battery cell module (250) to be recharged and a charging unit (240) to recharge the battery cell module (250) with power received from the contactless power transmitting apparatus (100);
- detecting in the contactless power receiving apparatus (100) an overheat of the battery cell module (250) when the charging unit (240) charges the first power in the battery cell module (250) and transmitting an overheat alarm signal to the contactless power transmitting apparatus (100) if said overheat is detected;
transmitting, from the contactless power transmitting apparatus (100), a second power lower than the first power to the contactless power receiving apparatus (200), through the power transmitting coil (140) in the case in which the overheat alarm signal is received from the contactless power receiving apparatus (200), to charge the second power in the battery cell module, thereby allowing the battery cell module not to be overheated;-switching the control unit (240) in a second power charging mode which allows the second power be charged in the battery cell module (250), when the overheat alarm signal is transmitted to the contactless power transmitting apparatus (100).

10. The contactless power transmitting and receiving method having an overheat protection function of claim 9, wherein the transmitting of the first power includes:
transmitting, in the contactless power transmitting apparatus (100), an ID request signal to the contactless power receiving apparatus (200); and
transmitting the first power in the case in which an ID signal is received from the contactless power receiving apparatus (200) according to the ID request signal.

11. The contactless power transmitting and receiving method having an overheat protection function of claim 10, wherein the transmitting of the ID request signal includes:
judging whether or not a change in a load has been generated in the power transmitting coil (140); and
transmitting the ID request signal in the case in which it is judged that the change in the load has been generated in the power transmitting coil (140).

12. The contactless power transmitting and receiving method having an overheat protection function of claim 9, further comprising, stopping the transmission of the power in the case in which a charging completion signal is received from the contactless power receiving apparatus (200).

13. A contactless power receiving method having an overheat protection function, comprising:
receiving, in a charging apparatus (240) in a first power charging mode, a first power transmitted by a contactless power transmitting apparatus (100) to charge the first power in a battery cell module (250);
judging, in a contactless power reception controlling unit (210), whether or not the battery cell module (250) has been overheated;
transmitting, from the contactless power reception controlling unit (210), an overheat alarm signal to the contactless power transmitting apparatus(100);
switching, in the contactless power reception controlling unit (210), a charging apparatus (240) into a second power charging mode which allows a second power lower than the first power to be charged in the battery cell module (250); and
receiving, in the charging apparatus, the second power, in the case in which it is judged that the battery cell module has been overheated, to charge the second power in the battery cell module, thereby allowing the battery cell module not to be overheated.

14. The contactless power receiving method having an overheat protection function of claim 13, wherein the judging of whether or not the battery cell module (250) has been overheated includes:
detecting, in a first temperature sensor (270), a first temperature of the battery cell module (250); and
judging that the battery cell module (250) has been overheated in the case in which the first temperature is equal to or higher than a preset temperature.

15. The contactless power receiving method having an overheat protection function of claim 13, wherein the judging of whether or not the battery cell module (250) has been overheated includes:
detecting, in a first temperature sensor (270), a first temperature of the battery cell module;detecting, in a second temperature sensor (280), a second temperature of the outside of the battery cell module (250);
and
judging that the battery cell module (250) has been overheated in the case in which a difference between the first and second temperatures is larger than a preset value.

16. The contactless power receiving method having an overheat protection function of claim 13, further comprising:
judging, in the contactless power reception controlling unit, whether or not the charging of the battery cell module (250) has been completed; and
generating a charging completion signal to transmit the generated charging completion signal to the contactless power transmitting apparatus (100) in the case in which it is judged that the charging of the battery cell module (250) has been completed.

## Patentansprüche

1. Berührungsloses Leistungsübertragungs- und -aufnahmesystem, welches aufweist:
eine berührungslose Leistungsübertragungsvorrichtung (100) mit einer Überhitzungsschutzfunktion und eine berührungslose Leistungsaufnahmevorrichtung (200) mit einem Batteriezellenmodul (250) und einer Ladeeinheit (240) zum Laden des Batteriezellenmoduls (250) mit Leistung, die von der berührungslosen Leistungsübertragungsvorrichtung (100) empfangen wird,
wobei die berührungslose Leistungsübertragungsvorrichtung (100) aufweist:
- eine Leistungsübertragungseinheit, aufweisend eine Leistungsübertragungsspule (140) zum Übertragen einer Leistung an die berührungslose Leistungsaufnahmevorrichtung (200);
- eine erste Signalempfangseinheit (160) zum Empfangen eines Überhitzungswarnsignals von der berührungslosen Leistungsaufnahmevorrichtung (200);
- eine berührungslose-Leistungsübertragung-Steuereinheit (110) zum Steuern der Leistungsübertragungseinheit zur Übertragung einer ersten Leistung an die berührungslose Leistungsaufnahmevorrichtung (200) und Steuern der Leistungsübertragungseinheit zur Übertragung einer zweiten Leistung, die geringer als die erste Leistung ist, an die berührungslose Leistungsaufnahmevorrichtung (200) in dem Fall, dass die erste Signalempfangseinheit das Überhitzungswarnsignal empfängt, um die zweite Leistung in das Batteriezellenmodul zu laden und hierdurch zu ermöglichen, dass das Batteriezellenmodul nicht überhitzt wird,
wobei die berührungslose Leistungsaufnahmevorrichtung (200) aufweist:
- eine berührungslose-Leistungsaufnahme-Steuereinheit (210) zur Erfassung einer Überhitzung des Batteriezellenmoduls (250), wenn die Ladeeinheit (240) die erste Leistung in das Batteriezellenmodul (250) lädt, und eine zweite Signalübertragungseinheit (290) zur Übertragung eines Überhitzungswarnsignals an die berührungslose Leistungsübertragungsvorrichtung (100), wenn die Überhitzung erfasst wird;
- die berührungslose-Leistungsaufnahme-Steuereinheit (210) zur Umschaltung der Ladeeinheit (240) in eine zweite Leistungsladebetriebsart, welche ermöglicht, dass die zweite Leistung in das Batteriezellenmodul (250) geladen wird, wenn das Überhitzungswarnsignal an die berührungslose Leistungsübertragungsvorrichtung (100) übertragen wird.

2. Das System von Anspruch 1, wobei die Leistungsübertragungseinheit aufweist:
einen Ansteuerungstreiber (120), welcher ein Ansteuerungssignal zum Übertragen der ersten Leistung oder der zweiten Leistung unter einer Steuerung der berührungslose-Leistungsübertragung-Steuereinheit (110) erzeugt;
einen Reihenresonanzwandler (130), welcher eine Gleichstrom-(DC)-Leistung gemäß dem Ansteuerungssignal umschaltet; und
die Leistungsübertragungsspule (140), welche die erste Leistung oder die zweite Leistung an die berührungslose Leistungsaufnahmevorrichtung (200) überträgt, während sie mit der durch den Reihenresonanzwandler (130) umgeschalteten Leistung in Resonanz versetzt wird.

3. Das System von Anspruch 1, wobei die Leistungsübertragungsvorrichtung ferner eine erste Signalübertragungseinheit (150), welche ein Identifikations-(ID)-Anforderungssignal unter einer Steuerung der berührungslose-Leistungsübertragung-Steuereinheit (110) erzeugt, um das erzeugte ID-Signal an die berührungslose Leistungsaufnahmevorrichtung (200) zu übertragen,
wobei die erste Signalempfangseinheit (160) ein ID-Signal, welches durch die berührungslose Leistungsaufnahmevorrichtung (200) gemäß dem ID-Anforderungssignal übertragen wird empfängt, um der berührungslose-Leistungsübertragung-Steuereinheit (110) das empfangene ID-Signal bereitzustellen.

4. Eine berührungslose Leistungsaufnahmevorrichtung (200) mit einer Überhitzungsschutzfunktion, welche aufweist:
eine Ladevorrichtung, die angepasst ist, um eine durch eine berührungslose Leistungsübertragungsvorrichtung (100) übertragene erste Leistung aufzunehmen, um ein Batteriezellenmodul (250) zu laden;
eine zweite Signalübertragungseinheit (290) zur Erzeugung eines Überhitzungswarnsignals, um das Überhitzungswarnsignal an die berührungslose Leistungsübertragungsvorrichtung (100) zu übertragen;
eine Ladeeinheit (240) zum Laden des Batteriezellenmoduls (250) durch die erste Leistung in einer ersten Leistungsladebetriebsart; und
eine berührungslose-Leistungsaufnahme-Steuereinheit (210), welche beurteilt, ob das Batteriezellenmodul überhitzt worden ist oder nicht, und die zweite Signalübertragungseinheit (290) steuert, um das Überhitzungswarnsignal zu erzeugen und das erzeugte Überhitzungswarnsignal an die berührungslose Leistungsübertragungsvorrichtung (100) zu übertragen, falls beurteilt wird, dass das Batteriezellenmodul überhitzt worden ist, und dann die Ladevorrichtung steuert, um eine zweite Leistung, die geringer als die erste Leistung ist, von der berührungslosen Leistungsübertragungsvorrichtung (100) aufzunehmen, um die zweite Leistung in das Batteriezellenmodul (250) zu laden und hierdurch zu ermöglichen, dass das Batteriezellenmodul nicht überhitzt wird,
wobei die Aufnahme-Steuereinheit (210) die Ladeeinheit (240) in eine zweite Leistungsladebetriebsart umschaltet, welche ermöglicht, dass die zweite Leistung in das Batteriezellenmodul (250) geladen wird, wenn die berührungslose Leistungsaufnahmevorrichtung (200) das Überhitzungswarnsignal erzeugt.

5. Die berührungslose Leistungsaufnahmevorrichtung mit einer Überhitzungsschutzfunktion von Anspruch 4, weiter aufweisend einen ersten Temperatursensor (270), welcher eine erste Temperatur des Batteriezellemoduls (250) erfasst,
wobei die berührungslose-Leistungsaufnahme-Steuereinheit (210) unter Verwendung der ersten Temperatur beurteilt, ob das Batteriezellenmodul (250) überhitzt worden ist oder nicht.

6. Die berührungslose Leistungsaufnahmevorrichtung mit einer Überhitzungsschutzfunktion von Anspruch 5, weiter aufweisend einen zweiten Temperatursensor (280), welcher einer zweite Temperatur außerhalb des Batteriezellenmoduls (250) erfasst,
wobei die berührungslose-Leistungsaufnahme-Steuereinheit (210) beurteilt, dass das Batteriezellenmodul (250) überhitzt worden ist, falls eine Differenz zwischen der ersten und der zweiten Temperatur größer als ein voreingestellter Wert ist.

7. Die berührungslose Leistungsaufnahmevorrichtung mit einer Überhitzungsschutzfunktion von Anspruch 4, weiter aufweisend eine zweite Signalempfangseinheit (260), welche ein durch die berührungslose Leistungsübertragungsvorrichtung (100) übertragenes ID-Anforderungssignal empfängt, um der berührungslose-Leistungsaufnahme-Steuereinheit (210) das ID-Anforderungssignal bereitzustellen,
wobei die zweite Signalübertragungseinheit (290) in dem Fall, dass das ID-Anforderungssignal empfangen wird, unter einer Steuerung der berührungslose-Leistungsaufnahme-Steuereinheit (210) ein ID-Signal erzeugt, um das erzeugte ID-Anforderungssignal an die berührungslose Leistungsübertragungsvorrichtung (100) zu übertragen.

8. Die berührungslose Leistungsaufnahmevorrichtung mit einer Überhitzungsschutzfunktion von Anspruch 4, wobei die Ladevorrichtung aufweist:
eine Leistungsaufnahmespule (220), welche angepasst ist, um die erste Leistung oder die zweite Leistung, die durch die berührungslose Leistungsübertragungsvorrichtung (100) übertragen wird, zu empfangen; eine Gleichrichtereinheit (230) zum Umwandeln der ersten Leistung oder der zweiten Leistung, die durch die Leistungsaufnahmespule (220) aufgenommen wird, in eine DC-Leistung; und
eine Ladeeinheit (240) zum Laden der durch die Gleichrichtereinheit (230) gleichgerichteten DC-Leistung in das Batteriezellenmodul (250) unter einer Steuerung der berührungslosen Leistungsaufnahmesteuereinheit (210).

9. Ein berührungsloses Leistungsübertragungs- und -aufnahmeverfahren mit einer Überhitzungsschutzfunktion, aufweisend:
- in einer berührungslosen Leistungsübertragungsvorrichtung (100), Übertragen einer ersten Leistung an eine berührungslose Leistungsaufnahmevorrichtung (200) in einer ersten Leistungsladebetriebsart mittels einer Leistungsübertragungsspule (140), wobei die berührungslose Leistungsaufnahmevorrichtung (200) ein wiederaufzuladendes Batteriezellenmodul (250) und eine Ladeeinheit (240) zum Wiederaufladen des Batteriezellenmoduls (250) mit Leistung, die von der berührungslosen Leistungsübertragungsvorrichtung (100) empfangen wird, aufweist;
- in der berührungslosen Leistungsaufnahmevorrichtung (100), Erfassen einer Überhitzung des Batteriezellenmoduls (250), wenn die Ladeeinheit (240) die erste Leistung in das Batteriezellenmodul (250) lädt, und Übertragen eines Überhitzungswarnsignals an die berührungslose Leistungsüberträgungsvorrichtung (100), wenn die Überhitzung erfasst wird;
von der berührungslosen Leistungsübertragungsvorrichtung (100) aus, Übertragen einer zweiten Leistung, die geringer als die erste Leistung ist, an die berührungslose Leistungsaufnahmevorrichtung (200) mittels der Leistungsübertragungsspule (140), falls das Überhitzungswarnsignal von der berührungslosen Leistungsaufnahmevorrichtung (200) empfangen wird, um die zweite Leistung in das Batteriezellenmodul zu laden und hierdurch zu ermöglichen, dass das Batteriezellenmodul nicht überhitzt wird; - Umschalten der Steuereinheit (240) in eine zweite Leistungsladebetriebsart, welche ermöglicht, dass die zweite Leistung in das Batteriezellenmodul (250) geladen wird, wenn das Überhitzungswarnsignal an die berührungslose Leistungsübertragungsvorrichtung (100) übertragen wird.

10. Das berührungslose Leistungsübertragungs- und -aufnahmeverfahren mit einer Überhitzungsschutzfunktion von Anspruch 9, wobei die Übertragung der ersten Leistung aufweist:
in der berührungslosen Leistungsübertragungsvorrichtung (100), Übertragen eines ID-Anforderungssignals an die berührungslose Leistungsaufnahmevorrichtung (200); und
Übertragen der ersten Leistung, falls ein ID-Signal gemäß dem ID-Anforderungssignal von der berührungslosen Leistungsaufnahmevorrichtung (200) empfangen wird.

11. Das berührungslose Leistungsübertragungs- und -aufnahmeverfahren mit einer Überhitzungsschutzfunktion von Anspruch 10, wobei die Übertragung des ID-Anforderungssignals aufweist:
Beurteilen, ob in der Leistungsübertragungsspule (140) eine Änderung in einer Last erzeugt worden ist oder nicht; und
Übertragen des ID-Anforderungssignals, falls beurteilt wird, dass in der Leistungsübertragungsspule (140) die Änderung in der Last erzeugt worden ist.

12. Das berührungslose Leistungsübertragungs- und -aufnahmeverfahren mit einer Überhitzungsschutzfunktion von Anspruch 9, weiterhin aufweisend ein Anhalten der Übertragung der Leistung, falls ein Ladefertigstellungssignal von der berührungslosen Leistungsaufnahmevorrichtung (200) empfangen wird.

13. Ein berührungsloses Leistungsaufnahmeverfahren mit einer Überhitzungsschutzfunktion, aufweisend:
in einer Ladevorrichtung (240) in einer ersten Leistungsladebetriebsart, Aufnehmen einer durch eine berührungslose Leistungsübertragungsvorrichtung (100) übertragenen ersten Leistung, um die erste Leistung in ein Batteriezellenmodul (250) zu laden;
in einer berührungslosen Leistungsaufnahmesteuereinheit (210), beurteilen, ob das Batteriezellenmodul (250) überhitzt worden ist oder nicht;
von der berührungslose-Leistungsaufnahme-Steuereinheit (210) aus, Übertragen eines Überhitzungswarnsignals an die berührungslose Leistungsübertragungsvorrichtung (100);
in der berührungslose-Leistungsaufnahme-Steuereinheit (210), Umschalten einer Ladevorrichtung (240) in eine zweite Leistungsladebetriebsart, welche ermöglicht, dass eine zweite Leistung, die geringer als die erste Leistung ist, in das Batteriezellenmodul (250) geladen wird; und
in der Ladevorrichtung, Aufnehmen der zweiten Leistung, falls beurteilt wird, dass das Batteriezellenmodul überhitzt worden ist, um die zweite Leistung in das Batteriezellenmodul zu laden und hierdurch zu ermöglichen, dass das Batteriezellenmodul nicht überhitzt wird.

14. Das berührungslose Leistungsaufnahmeverfahren mit einer Überhitzungsschutzfunktion von Anspruch 13, wobei die Beurteilung, ob das Batteriezellenmodul (250) überhitzt worden ist oder nicht, aufweist:
in einem ersten Temperatursensor (270), Erfassen einer ersten Temperatur des Batteriezellenmoduls (250), und
Beurteilen, dass das Batteriezellenmodul (250) überhitzt worden ist, falls die erste Temperatur gleich oder höher als eine voreingestellte Temperatur ist.

15. Das berührungslose Leistungsaufnahmeverfahren mit einer Überhitzungsschutzfunktion von Anspruch 13, wobei die Beurteilung, ob das Batteriezellenmodul (250) überhitzt worden ist oder nicht, aufweist:
in einem ersten Temperatursensor (270), Erfassen einer ersten Temperatur des Batteriezellenmoduls; in einem zweiten Temperatursensor (280), Erfassen einer zweiten Temperatur außerhalb des Batteriezellenmoduls (250);
und
Beurteilen, dass das Batteriezellenmodul (250) überhitzt worden ist, falls eine Differenz zwischen der ersten und der zweiten Temperatur größer als ein voreingestellter Wert ist.

16. Das berührungslose Leistungsaufnahmeverfahren mit einer Überhitzungsschutzfunktion von Anspruch 13, weiter aufweisend:
in der berührungslose-Leistungsaufnahme-Steuereinheit, beurteilen, ob das Laden des Batteriezellenmoduls (250) fertiggestellt worden ist oder nicht; und
Erzeugen eines Ladefertigstellungssignals, um das erzeugte Ladefertigstellungssignal an die berührungslose Leistungsübertragungsvorrichtung (100) zu übertragen, falls beurteilt wird, dass das Laden des Batteriezellenmoduls (250) fertiggestellt worden ist.

## Revendications

1. Système de transmission et de réception d'énergie sans contact comportant :
un appareil de transmission d'énergie sans contact (100) ayant une fonction de protection contre la surchauffe et un appareil de réception d'énergie sans contact (200) incluant un module de cellule de batterie (250) et une unité de charge (240) pour charger le module de cellule de batterie (250) avec de l'énergie reçue de l'appareil de transmission d'énergie sans contact (100),
ledit appareil de transmission d'énergie sans contact (100) comportant :
- une unité de transmission d'énergie incluant une bobine de transmission d'énergie (140) pour transmettre une énergie à l'appareil de réception d'énergie sans contact (200),
- une première unité de réception de signal (160) pour recevoir un signal d'alarme de surchauffe provenant de l'appareil de réception d'énergie sans contact (200), et
- une unité de commande de transmission d'énergie sans contact (110) pour commander l'unité de transmission d'énergie afin de transmettre une première énergie à l'appareil de réception d'énergie sans contact (200), et commander l'unité de transmission d'énergie afin de transmettre une seconde énergie inférieure à la première énergie à l'appareil de réception d'énergie sans contact (200) dans le cas où la première unité de réception de signal reçoit le signal d'alarme de surchauffe, afin de charger la seconde énergie dans le module de cellule de batterie, en permettant ainsi au module de cellule de batterie de ne pas surchauffer,
l'appareil de réception d'énergie sans contact (200) comportant :
- une unité de commande de réception d'énergie sans contact (210) pour détecter une surchauffe du module de cellule de batterie (250) lorsque l'unité de charge (240) charge la première énergie dans le module de cellule de batterie (250) et une seconde unité de transmission de signal (290) pour transmettre un signal d'alarme de surchauffe à l'appareil de transmission d'énergie sans contact (100) si ladite surchauffe est détectée,
- l'unité de commande de réception d'énergie sans contact (210) pour basculer l'unité de charge (240) dans un second mode de charge d'énergie qui permet de charger la seconde énergie dans le module de cellule de batterie (250) lorsque le signal d'alarme de surchauffe est transmis à l'appareil de transmission d'énergie sans contact (100).

2. Système selon la revendication 1, dans lequel l'unité de transmission d'énergie inclut :
une commande d'attaque (120) générant un signal d'attaque pour transmettre la première énergie ou la seconde énergie sous contrôle de l'unité de commande de transmission d'énergie sans contact (110),
un convertisseur résonant en série (130) basculant une énergie en courant continu (DC) en fonction du signal d'attaque, et
la bobine de transmission d'énergie (140) transmettant la première énergie ou la seconde énergie à l'appareil de réception d'énergie sans contact (200) tout en étant en résonance avec l'énergie commutée par le convertisseur résonant en série (130).

3. Système selon la revendication 1, dans lequel l'appareil de transmission d'énergie comporte en outre une première unité de transmission de signal (150) générant un signal de demande d'identification (ID) sous contrôle de l'unité de commande de transmission d'énergie sans contact (110) pour transmettre le signal d'ID généré à l'appareil de réception d'énergie sans contact (200),
dans lequel la première unité de réception de signal (160) reçoit un signal d'ID transmis par l'appareil de réception d'énergie sans contact (200) en fonction du signal de demande d'ID pour fournir le signal d'ID reçu à l'unité de commande de transmission d'énergie sans contact (110).

4. Appareil de réception d'énergie sans contact (200) ayant une fonction de protection contre la surchauffe, comportant :
un appareil de charge adapté pour recevoir une première énergie transmise par un appareil de transmission d'énergie sans contact (100) pour charger un module de cellule de batterie (250),
une seconde unité de transmission de signal (290) pour générer un signal d'alarme de surchauffe pour transmettre le signal d'alarme de surchauffe à l'appareil de transmission d'énergie sans contact (100),
une unité de charge (240) pour charger le module de cellule de batterie (250) par la première énergie dans un premier mode de charge d'énergie, et
une unité de commande de réception d'énergie sans contact (210) jugeant si oui ou non le module de cellule de batterie a surchauffé, et commander la seconde unité de transmission de signal (290) pour générer le signal d'alarme de surchauffe et pour transmettre le signal d'alarme de surchauffe généré à l'appareil de transmission d'énergie sans contact (100) dans le cas où il est jugé que le module de cellule de batterie a surchauffé et ensuite commander l'appareil de charge pour recevoir une seconde énergie inférieure à la première énergie provenant de l'appareil de transmission d'énergie sans contact (100) pour charger la seconde énergie dans le module de cellule de batterie (250), en permettant ainsi au module de cellule de batterie de ne pas surchauffer,
dans lequel lorsque l'appareil de réception d'énergie sans contact (200) génère le signal d'alarme de surchauffe, l'unité de commande de réception (210) bascule l'unité de charge (240) dans un second mode de charge d'énergie qui permet de charger la seconde énergie dans le module de cellule de batterie (250).

5. Appareil de réception d'énergie sans contact ayant une fonction de protection contre la surchauffe selon la revendication 4, comportant en outre un premier capteur de température (270) détectant une première température du module de cellule de batterie (250),
dans lequel l'unité de commande de réception d'énergie sans contact (210) juge si oui ou non le module de cellule de batterie (250) a surchauffé, en utilisant la première température.

6. Appareil de réception d'énergie sans contact ayant une fonction de protection contre la surchauffe selon la revendication 5, comportant en outre un second capteur de température (280) détectant une seconde température de l'extérieur du module de cellule de batterie (250),
dans lequel l'unité de commande de réception d'énergie sans contact (210) juge que le module de cellule de batterie (250) a surchauffé dans le cas où une différence entre les première et seconde températures est supérieure à une valeur pré-établie.

7. Appareil de réception d'énergie sans contact ayant une fonction de protection contre la surchauffe selon la revendication 4, comportant en outre une seconde unité de réception de signal (260) recevant un signal de demande d'ID transmis par l'appareil de transmission d'énergie sans contact (100) pour fournir le signal de demande d'ID à l'unité de commande de réception d'énergie sans contact (210),
dans lequel la seconde unité de transmission de signal (290) génère un signal d'ID sous contrôle de l'unité de commande de réception d'énergie sans contact (210) pour transmettre le signal de demande d'ID généré à l'appareil de transmission d'énergie sans contact (100), dans le cas où le signal de demande d'ID est reçu.

8. Appareil de réception d'énergie sans contact ayant une fonction de protection contre la surchauffe selon la revendication 4, dans lequel l'appareil de charge inclut :
une bobine de réception d'énergie (220) adaptée pour recevoir la première énergie ou la seconde énergie transmise par l'appareil de transmission d'énergie sans contact (100),
une unité de redressement (230) pour convertir la première énergie ou la seconde énergie reçue par la bobine de réception d'énergie (220) en une énergie DC, et
une unité de charge (240) pour charger l'énergie DC redressée par l'unité de redressement (230) dans le module de cellule de batterie (250) sous contrôle de l'unité de commande de réception d'énergie sans contact (210).

9. Procédé de transmission et de réception d'énergie sans contact ayant une fonction de protection contre la surchauffe, comportant les étapes consistant à :
- transmettre, dans un appareil de transmission d'énergie sans contact (100), une première énergie à un appareil de réception d'énergie sans contact (200) dans un premier mode de charge d'énergie par l'intermédiaire d'une bobine de transmission d'énergie (140), l'appareil de réception d'énergie sans contact (200) incluant un module de cellule de batterie (250) à recharger et une unité de charge (240) pour recharger le module de cellule de batterie (250) avec l'énergie reçue de l'appareil de transmission d'énergie sans contact (100),
- détecter, dans l'appareil de réception d'énergie sans contact (100), une surchauffe du module de cellule de batterie (250) lorsque l'unité de charge (240) charge la première énergie dans le module de cellule de batterie (250) et transmettre un signal d'alarme de surchauffe à l'appareil de transmission d'énergie sans contact (100) si ladite surchauffe est détectée,
- transmettre, à partir de l'appareil de transmission d'énergie sans contact (100), une seconde énergie inférieure à la première énergie à l'appareil de réception d'énergie sans contact (200), par l'intermédiaire de la bobine de transmission d'énergie (140) dans le cas où le signal d'alarme de surchauffe est reçu de l'appareil de réception d'énergie sans contact (200), pour charger la seconde énergie dans le module de cellule de batterie, en permettant ainsi au module de cellule de batterie de ne pas surchauffer,
- basculer l'unité de commande (240) dans un second mode de charge d'énergie qui permet de charger la seconde énergie dans le module de cellule de batterie (250), lorsque le signal d'alarme de surchauffe est transmis à l'appareil de transmission d'énergie sans contact (100).

10. Procédé de transmission et de réception d'énergie sans contact ayant une fonction de protection contre la surchauffe selon la revendication 9, dans lequel la transmission de la première énergie inclut les étapes consistant à :
transmettre, dans l'appareil de transmission d'énergie sans contact (100), un signal de demande d'ID à l'appareil de réception d'énergie sans contact (200), et
transmettre la première énergie dans le cas où un signal d'ID est reçu de l'appareil de réception d'énergie sans contact (200) en fonction du signal de demande d'ID.

11. Procédé de transmission et de réception d'énergie sans contact ayant une fonction de protection contre la surchauffe selon la revendication 10, dans lequel la transmission du signal de demande d'ID inclut les étapes consistant à :
juger si oui ou non une variation de charge a été générée dans la bobine de transmission d'énergie (140), et
transmettre le signal de demande d'ID dans le cas où il est jugé que la variation de charge a été générée dans la bobine de transmission d'énergie (140)

12. Procédé de transmission et de réception d'énergie sans contact ayant une fonction de protection contre la surchauffe selon la revendication 9, comportant en outre l'étape de l'arrêt de la transmission de l'énergie dans le cas où un signal de fin de charge est reçu de l'appareil de réception d'énergie sans contact (200).

13. Procédé de réception d'énergie sans contact ayant une fonction de protection contre la surcharge, comportant les étapes consistant à :
recevoir, dans un appareil de charge (240) dans un premier mode de charge d'énergie, une première énergie transmise par un appareil de transmission d'énergie sans contact (100) pour charger la première énergie dans un module de cellule de batterie (250),
juger, dans une unité de commande de réception d'énergie sans contact (210), si oui ou non le module de cellule de batterie (250) a surchauffé,
transmettre, à partir de l'unité de commande de réception d'énergie sans contact (210), un signal d'alarme de surchauffe à l'appareil de transmission d'énergie sans contact (100),
basculer, dans l'unité de commande de réception d'énergie sans contact (210), un appareil de charge (240) dans un second mode de charge d'énergie qui permet de charger une seconde énergie inférieure à la première énergie dans le module de cellule de batterie (250), et
recevoir, dans l'appareil de charge, la seconde énergie, dans le cas où il est jugé que le module de cellule de batterie a surchauffé, pour charger la seconde énergie dans le module de cellule de batterie, en permettant ainsi au module de cellule de batterie de ne pas surchauffer.

14. Procédé de réception d'énergie sans contact ayant une fonction de protection contre la surchauffe selon la revendication 13, dans lequel le fait de juger si oui ou non le module de cellule de batterie (250) a surchauffé inclut les étapes consistant à :
détecter, dans un premier capteur de température (270), une première température du module de cellule de batterie (250), et
juger que le module de cellule de batterie (250) a surchauffé dans le cas où la première température est égale ou supérieure à une température pré-établie.

15. Procédé de réception d'énergie sans contact ayant une fonction de protection contre la surchauffe selon la revendication 13, dans lequel le fait de juger si oui ou non le module de cellule de batterie (250) a surchauffé inclut les étapes consistant à:
détecter, dans un premier capteur de température (270), une première température du module de cellule de batterie,
détecter, dans un second capteur de température (280), une seconde température de l'extérieur du module de cellule de batterie (250),
et
juger que le module de cellule de batterie (250) a surchauffé dans le cas où une différence entre les première et seconde températures est supérieure à une valeur pré-établie.

16. Procédé de réception d'énergie sans contact ayant une fonction de protection contre la surchauffe selon la revendication 13, comportant en outre les étapes consistant à :
juger, dans l'unité de commande de réception d'énergie sans contact, si oui ou non la charge du module de cellule de batterie (250) est terminée, et
générer un signal de fin de charge pour transmettre le signal de fin de charge généré à l'appareil de transmission d'énergie sans contact (100) dans le cas où il est jugé que la charge du module de cellule de batterie (250) est terminée.
